# FASCICULE DE BREVET EUROPEEN

(11) **EP 2 862 269 B1**
(45) Date de publication et mention de la délivrance du brevet: **15.06.2016**
(21) Numéro de dépôt: 13727603.6
(22) Date de dépôt: 06.06.2013
(51) Int. Cl.: H02P 21/24, H02P 6/08

(54) **SYSTEME DE COMMANDE D'UN MOTEUR ELECTRIQUE SYNCHRONE**
SYSTEM ZUM STEUERN EINES ELEKTRISCHEN SYNCHRONMOTORS
SYSTEM FOR CONTROLLING A SYNCHRONOUS ELECTRIC MOTOR

(30) Priorité: 13.06.2012 FR 1255537
(43) Date de publication de la demande: 22.04.2015
(73) Titulaire: Schneider Toshiba Inverter Europe SAS, 27120 Pacy sur Eure (FR)
(72) Inventeur: DEFAIX, Olivier, F-78000 Versailles (FR); DEVOS, Thomas, F-78955 Carrières sous Poissy (FR)
(74) Mandataire: Dufresne, Thierry
(86) Numéro de dépôt international: PCT/EP2013/061703
(87) Numéro de publication internationale: WO 2013/186115

(56) Documents cités:
- US-A1- 2007 236 167

## Description

### Domaine technique de l'invention

La présente invention se rapporte à un système de commande mis en oeuvre dans un variateur de vitesse connecté à un moteur électrique synchrone.

### Etat de la technique

Dans un moteur électrique synchrone, à couple nul, le courant au stator du moteur est nul mais le moteur peut continuer à tourner et donc avoir une vitesse non nulle. Dans un contexte de sécurité fonctionnelle, il est connu de surveiller la vitesse d'un moteur électrique en exécutant deux algorithmes indépendants, différents et en redondance. Lorsque le moteur électrique synchrone tourne alors que le courant au stator est nul, l'estimation de la vitesse du moteur avec un algorithme basé sur le courant au stator peut donc s'avérer difficile.

Des techniques avec des injections haute fréquence permettent d'estimer l'angle du moteur et donc sa vitesse de rotation. C'est le cas dans la demande de brevet US2007/0236167A1. L'un des inconvénients de cette méthode est la nécessité d'un découplage suffisant des échelles de temps (l'injection doit être rapide par rapport à la fréquence de rotation). Il faut également que les ondulations de courant soient suffisantes pour passer outre les effets non linéaires des capteurs de courant (quantification par exemple).

Le but de l'invention est de proposer un système de commande mis en oeuvre dans un variateur de vitesse permettant d'estimer la vitesse d'un moteur électrique synchrone, même lorsque le couple est nul, sans connaissance sur les paramètres du moteur, ni d'injection haute fréquence.

### Exposé de l'invention

Ce but est atteint par un système de commande inclus dans un variateur de vitesse connecté par des phases de sortie à un moteur électrique synchrone, ledit moteur électrique synchrone étant commandé selon une loi de commande mise en oeuvre par le variateur de vitesse, une première vitesse du moteur électrique synchrone étant déterminée par un premier estimateur de vitesse, ledit système comportant un deuxième estimateur de vitesse permettant de déterminer une deuxième vitesse du moteur électrique synchrone et un module générateur de signal agencé pour générer un signal en courant d'estimation non constant venant s'ajouter au courant de flux de référence de manière à créer un courant de flux de référence corrigé qui est appliqué en entrée de la loi de commande, ladite loi de commande étant exécutée pour déterminer les tensions à appliquer sur les phases de sortie, le deuxième estimateur étant agencé pour récupérer la réponse en courant sur les phases de sortie, en vue d'en déduire la deuxième vitesse du moteur électrique synchrone.

Préférentiellement, le signal en courant est de type sinusoïdal basse fréquence par rapport à la fréquence du moteur électrique. La fréquence du signal injecté doit être inférieure à la fréquence du moteur, par exemple d'un rapport de dix.

Préférentiellement, le signal en courant est non générateur de couple.

Selon une particularité, le système comporte un bloc de sécurité agencé pour comparer la première vitesse et la deuxième vitesse déterminées pour le moteur électrique synchrone.

Selon une autre particularité, le premier estimateur de vitesse est agencé dans une loi de commande mise en oeuvre par le système de commande.

Selon l'invention, le module générateur de signal est activé par le deuxième estimateur, par une commande externe ou est actif en permanence.

### Brève description des figures

D'autres caractéristiques et avantages vont apparaître dans la description détaillée qui suit faite en regard des dessins annexés dans lesquels :
- la figure 1 représente le système de commande de l'invention,
- les figures 2A et 2B représentent des courbes de simulation établies sans le système de commande de l'invention,
- les figures 3A et 3B représentent des courbes de simulation établies avec le système de commande de l'invention.

### Description détaillée d'au moins un mode de réalisation

L'invention concerne un système de commande mis en oeuvre dans un variateur de vitesse pour la commande d'un moteur électrique synchrone.

De manière connue, un variateur de vitesse comporte :
- trois phases d'entrée A, B, C connectées à un réseau RD de distribution électrique,
- un module redresseur REC situé en entrée et destiné à convertir une tension alternative fournie par le réseau RD de distribution électrique en une tension continue,
- un bus continu d'alimentation connecté, en amont, au module redresseur REC et, en aval, au module onduleur INV et comportant deux lignes d'alimentation L1, L2 entre lesquelles la tension continue est appliquée,
- un condensateur de bus Cbus connecté aux deux lignes d'alimentation L1, L2 et chargé de maintenir la tension continue du bus à une valeur constante,
- un module onduleur INV connecté par trois phases de sortie 1, 2, 3 au moteur M électrique synchrone et commandé par des signaux de commande générés par une unité de commande mettant en oeuvre une loi de commande LC déterminée. Le module onduleur INV d'un variateur de vitesse comporte plusieurs bras de commutation, par exemple au nombre de trois si le moteur M est triphasé. Chaque bras de commutation comporte deux transistors de puissance, par exemple de type IGBT, commandés chacun par un dispositif de commande recevant des signaux de commande de la part de l'unité de commande.

L'invention s'applique à un variateur de vitesse fonctionnant selon une loi de commande en boucle ouverte. Elle présente un intérêt tout particulier dans un cadre de sécurité fonctionnelle.

En boucle ouverte, un premier estimateur exécuté par l'unité de commande permet de déterminer une première vitesse W1s estimée du moteur M électrique synchrone. Pour estimer la vitesse du moteur électrique synchrone, ce premier estimateur E1 de vitesse se base par exemple sur la loi de commande LC ou sur des mesures de tension sur les phases de sortie 1, 2, 3 si de telles données sont disponibles.

Dans un contexte de sécurité fonctionnelle, un deuxième estimateur E2 est nécessaire pour déterminer une deuxième vitesse W2s estimée du moteur électrique synchrone. Le système de commande comporte un bloc de sécurité BS permettant de comparer la deuxième vitesse estimée W2s et la première vitesse estimée W1s. Si des divergences apparaissent entre les deux vitesses estimées, le bloc de sécurité BS sera par exemple amené à stopper le moteur M électrique synchrone.

Dans le domaine de la sécurité fonctionnelle, en vue d'éviter tout point commun de défaillance, les deux estimateurs E1, E2 sont différents, dans leur principe de fonctionnement et dans leur réalisation.

La surveillance de la vitesse par les deux estimateurs E1, E2 en redondance a différents objectifs, prévus dans une norme connue (par exemple IEC61800-5-2), comme par exemple la limitation sûre de la vitesse (SLS "Safe Limited Speed") ou l'arrêt sûr (SS1 "Safe Stop 1 ").

Dans un moteur M électrique synchrone, le courant au stator est nul lorsque le couple est nul. Cependant, dans cette situation, le moteur M peut quand même être en rotation et donc avoir une vitesse non nulle. L'estimation de la vitesse du moteur électrique synchrone à couple nul ne peut donc pas être réalisée en se basant sur le courant au stator.

Selon l'invention, lorsque le couple est nul, le deuxième estimateur E2 de vitesse permet d'estimer la vitesse du moteur électrique synchrone alors que le courant au stator est nul. Le système est agencé pour appliquer, sur les phases de sortie 1, 2, 3, des tensions V1, V2, V3 représentatives d'un signal en courant, dit signal en courant d'estimation Idₑₛₜ, non générateur de couple, et pour mesurer la réponse en courant sur les phases de sortie, en vue d'en déduire une vitesse du moteur électrique synchrone.

Ce signal en courant d'estimation Idₑₛₜ est appliqué dans la direction du flux permanent de l'aimant du moteur M électrique synchrone, c'est-à-dire suivant l'axe d de la commande, dit axe de flux. L'application d'un courant dans la direction du flux de l'aimant permet de ne pas créer de perturbations dans le moteur M lorsqu'il est en marche.

Selon l'invention, le signal en courant d'estimation Idₑₛₜ est non constant, préférentiellement sinusoïdal. Par signal non constant, on entend un signal dont la dérivée n'est pas nulle sur une durée déterminée. Il sera ainsi indépendant de la loi de commande, des paramètres du moteur M électrique synchrone et de la limitation de tension. En effet, en fonction de la loi de commande LC, la valeur moyenne du courant de flux n'est pas forcément égale au courant de flux réel. Il est donc possible d'avoir un courant dans les phases de sortie nul même si la consigne est non nulle et constante. Un signal non constant permet de s'affranchir de ce problème et de garantir un signal réel non nul (sauf en quelques points) qui permet d'estimer la vitesse du moteur.

En outre, le signal en courant d'estimation Idₑₛₜ est préférentiellement non générateur de couple. Par signal en courant non générateur de couple, on entend un signal ayant une fréquence suffisamment lente pour ne pas créer de perturbation de couple.

Son amplitude peut être fixe, par exemple choisie en fonction du courant nominal du moteur électrique synchrone, ou variable, tenant compte des courants mesurés sur les phases de sortie.

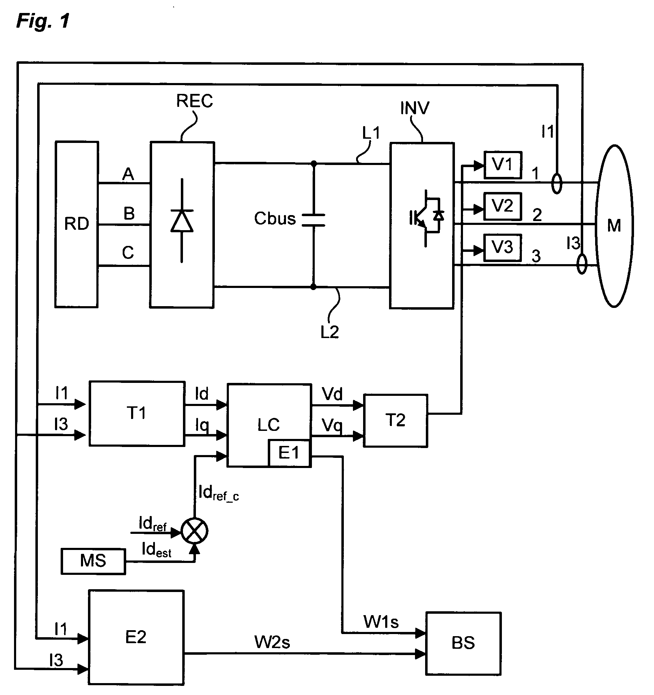

En référence à la figure 1, le signal en courant d'estimation Idₑₛₜ est issu d'un module générateur de signal MS. Le module générateur de signal MS génère le signal en courant d'estimation Idₑₛₜ qui vient s'ajouter au courant de flux de référence Id_{ref}, normalement appliqué en entrée de la loi de commande LC. Le courant de flux de référence corrigé Id_{ref_c} qui est appliqué en entrée de la loi de commande LC est donc représentatif du signal en courant d'estimation Idₑₛₜ évoqué ci-dessus. De manière connue, à partir du courant de flux de référence corrigé Id_{ref_c} et des mesures des courants de flux Id et de couple Iq (obtenus après transformations T1), la loi de commande LC détermine les tensions à appliquer aux phases de sortie 1, 2, 3, par exemple via des transformations T2 de Concordia et Park. Les tensions V1, V2, V3 calculées sont ainsi appliquées sur les phases de sortie par commande en MLI (Modulation de Largeur d'Impulsions) du module onduleur INV.

Le deuxième estimateur E2 de vitesse récupère la mesure d'au moins deux courants 11, 13 injectés sur les trois phases du moteur M puis détermine, uniquement à partir de ces mesures, la deuxième vitesse estimée W2s du moteur M électrique synchrone (sans utilisation de données moteurs). La détermination de la deuxième vitesse est réalisée en employant une boucle à verrouillage de phase (PLL-"Phase Locked Loop").

Comme décrit ci-dessus, la première vitesse estimée W1s du moteur électrique est par exemple directement issue de la loi de commande LC. Le bloc de sécurité BS compare ensuite la première vitesse estimée W1s et la deuxième vitesse estimée W2s. Si des divergences apparaissent, le bloc de sécurité BS peut être amené à stopper le moteur, par exemple par blocage du module onduleur.

L'injection du signal en courant d'estimation Idₑₛₜ permet au deuxième estimateur E2 de vitesse de conserver une deuxième estimation de la vitesse alors que le couple est nul et donc de mettre en oeuvre des principes de sécurité fonctionnelle sur toute la plage de fonctionnement du moteur M électrique synchrone.

Le module générateur de signal MS peut être actif en permanence ou activé seulement lorsque le couple est nul et donc lorsque le courant au stator est nul. Il pourra par exemple être activé par le deuxième estimateur E2 ou par une commande externe. Lorsque le couple n'est pas nul et qu'un courant au stator est détectable, la génération du signal en courant Idₑₛₜ n'est en effet pas nécessaire car il est possible d'estimer la vitesse du moteur M électrique synchrone à partir du courant au stator.

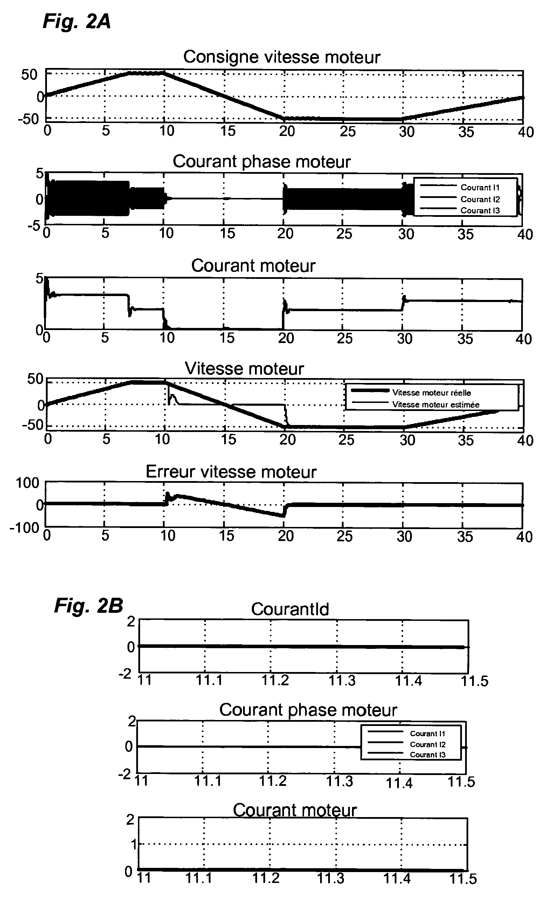

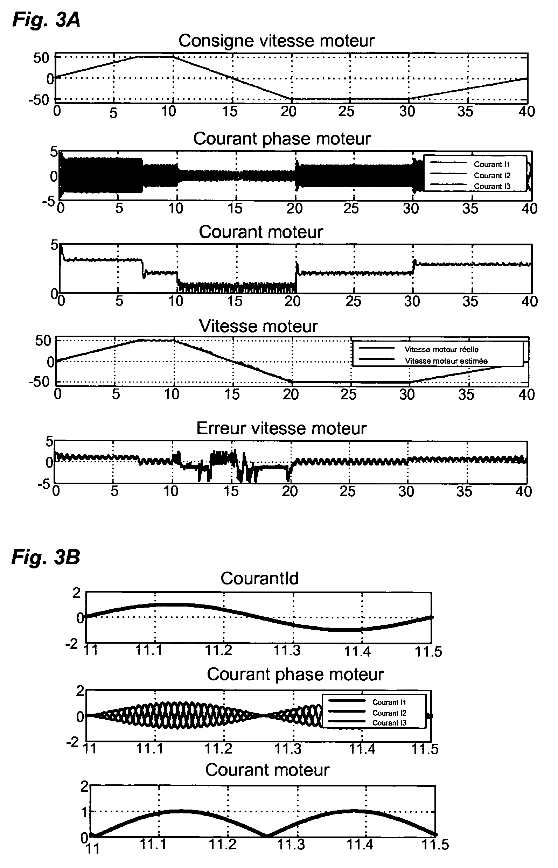

Les figures 2A, 2B, 3A et 3B illustrent l'intérêt de l'invention.

Sur les figures 2A et 2B, le deuxième estimateur de l'invention n'est pas mis en oeuvre. On peut voir qu'entre la dixième et la vingtième seconde, le courant moteur est nul. La vitesse estimée du moteur est alors considérée comme nulle alors que la vitesse réelle du moteur ne l'est pas. L'erreur sur la vitesse du moteur est donc importante et incompatible avec des principes de sécurité fonctionnelle.

Sur les figures 3A et 3B, le deuxième estimateur de l'invention est mis en oeuvre. Un courant de flux Id sinusoïdal est donc appliqué et les courants 11, 12 et 13 sont donc observables sur les phases de sortie. Un courant moteur, ne générant aucun couple, est donc visible. La courbe de vitesse estimée du moteur est proche de la courbe de vitesse réelle du moteur, permettant de minimiser l'erreur sur la vitesse et donc de garantir un certain niveau de sécurité.

## Revendications

1. Système de commande (T₁; L_{C}; E₁; T₂; E₂; BS; V₁, V₂, V₃; MS) inclus dans un variateur de vitesse (RD; A.B.C; REC; C_{bus}; L₁, L₂; INV) connecté par des phases de sortie (1, 2, 3) à un moteur (M) électrique synchrone, ledit moteur (M) électrique synchrone étant commandé selon une loi de commande (LC) mise en oeuvre par le variateur de vitesse, une première vitesse (W1s) du moteur électrique synchrone étant déterminée par un premier estimateur de vitesse (E1), un deuxième estimateur de vitesse (E2) permettant de déterminer une deuxième vitesse (W2s) du moteur (M) électrique synchrone et étant agencé pour récupérer la réponse en courant (I1, I2, I3) sur les phases de sortie, en vue d'en déduire la deuxième vitesse (W2s) du moteur électrique synchrone, ledit système de commande étant **caractérisé en ce qu'**il comporte un module générateur de signal (MS) agencé pour générer un signal en courant d'estimation (Idₑₛₜ) non constant venant s'ajouter à un courant de flux de référence (Idref) de manière à créer un courant de flux de référence corrigé (Id_{ref_c}) qui est appliqué en entrée de la loi de commande (LC), ladite loi de commande étant exécutée pour déterminer des tensions (V₁, V₂, V₃) à appliquer sur les phases de sortie (1, 2, 3).

2. Système selon la revendication 1, **caractérisé en ce que** le signal en courant (Idₑₛₜ) est de type sinusoïdal basse fréquence par rapport à la fréquence du moteur.

3. Système selon la revendication 1 ou 2, **caractérisé en ce que** le signal en courant est non générateur de couple.

4. Système de commande selon la revendication 1 ou 2, **caractérisé en ce qu'**il comporte un bloc de sécurité (BS) agencé pour comparer la première vitesse (W1s) et la deuxième vitesse (W2s) déterminées pour le moteur électrique synchrone.

5. Système de commande selon la revendication 1, **caractérisé en ce que** le premier estimateur de vitesse (E1) est agencé dans une loi de commande (LC) mise en oeuvre par le système de commande.

6. Système de commande selon l'une des revendications 1 à 4, **caractérisé en ce que** le module générateur de signal est activé par le deuxième estimateur.

7. Système de commande selon l'une des revendications 1 à 4, **caractérisé en ce que** le module générateur de signal est activé par une commande externe.

8. Système de commande selon l'une des revendications 1 à 4, **caractérisé en ce que** le module générateur (MS) de signal est actif en permanence.

## Patentansprüche

1. Steuersystem (T₁; L_{C}; E₁; T₂; E₂; BS; V₁; V₂; V₃; MS), das in einem Umrichter (RD; A, B, C; REC; C_{bus}; L₁, L₂; INV) enthalten, ist, der durch Ausgangsphasen (1, 2, 3) mit einem Synchron-Elektromotor (M) verbunden ist, wobei der Synchron-Elektromotor (M) gemäß einem Steuergesetz (LC) gesteuert wird, das vom Umrichter angewendet wird, wobei eine erste Drehzahl (W1s) des Synchron-Elektromotors von einer ersten Drehzahlschätzfunktion (E1) bestimmt wird, wobei eine zweite Drehzahlschätzfunktion (E2) es ermöglicht, eine zweite Drehzahl (W2s) des Synchron-Elektromotors (M) zu bestimmen und eingerichtet ist, um den Ansprechstrom (I1, I2, I3) an den Ausgangsphasen wiederzugewinnen, um daraus die zweite Drehzahl (W2s) des elektronischen Synchronmotors abzuleiten, wobei das Steuersystem **dadurch gekennzeichnet ist, dass** es ein Signalgebermodul (MS) aufweist, das eingerichtet ist, um ein nicht konstantes Schätzstromsignal (Idₑₛₜ) zu generieren, das zu einem Bezugsflussstrom (Idref) hinzugefügt wird, um einen korrigierten Flussstrom (Id_{ref_c}) zu erzeugen, der am Eingang des Steuergesetzes (LC) angelegt wird, wobei das Steuergesetz ausgeführt wird, um Spannungen (V₁, V₂, V₃) zu bestimmen, die an die Ausgangsphasen (1, 2, 3) anzulegen sind.

2. System nach Anspruch 1, **dadurch gekennzeichnet, dass** das Stromsignal (Idₑₛₜ) bezüglich der Frequenz des Motors von der Art sinusförmig niederfrequent ist.

3. System nach Anspruch 1 oder 2, **dadurch gekennzeichnet, dass** das Stromsignal kein Drehmomenterzeuger ist.

4. Steuersystem nach Anspruch 1 oder 2, **dadurch gekennzeichnet, dass** es einen Sicherheitsblock (BS) aufweist, der eingerichtet ist, um die erste Drehzahl (W1s) und die zweite Drehzahl (W2s) zu vergleichen, die für den Synchron-Elektromotor bestimmt sind.

5. Steuersystem nach Anspruch 1, **dadurch gekennzeichnet, dass** die erste Drehzahlschätzfunktion (E1) in einem Steuergesetz (LC) eingerichtet ist, das vom Steuersystem angewendet wird.

6. Steuersystem nach einem der Ansprüche 1 bis 4, **dadurch gekennzeichnet, dass** das Signalgebermodul von der zweiten Schätzfunktion aktiviert wird.

7. Steuersystem nach einem der Ansprüche 1 bis 4, **dadurch gekennzeichnet, dass** das Signalgebermodul von einer externen Steuerung aktiviert wird.

8. Steuersystem nach einem der Ansprüche 1 bis 4, **dadurch gekennzeichnet, dass** das Signalgebermodul (MS) durchgehend aktiv ist.

## Claims

1. A control system (T1; LC; E1; T2; E2; BS; V1, V2, V3; MS) included in a variable speed drive (RD; A. B. C; REC; Cbus; L1, L2; INV) connected by output phases (1, 2, 3) to a synchronous electric motor (M), said synchronous electric motor (M) being controlled according to a control law (LC) implemented by the variable speed drive, a first speed (W1s) of the synchronous electric motor being determined by a first speed estimator (E1), a second speed estimator (E2) making it possible to determine a second speed (W2s) of the synchronous electric motor (M) and being designed so as to recover the response in terms of current (I1, I2, I3) on the output phases, with a view to deducing therefrom the second speed (W2s) of the synchronous electric motor, said control system being **characterized in that** it comprises a signal-generating module (MS) designed so as to generate a non-constant signal in terms of estimation current (Idₑₛₜ) which gets added to a reference flux current (Idref) so as to create a corrected reference flux current (Id_{ref_c}) which is applied as input to the control law (LC), said control law being executed to determine voltages (V1, V2, V3) to be applied to the output phases (1, 2,3).

2. The system as claimed in claim 1, **characterized in that** the signal in terms of current (Idₑₛₜ) is of low-frequency sinusoidal type with respect to the frequency of the motor.

3. The system as claimed in claim 1 or 2, **characterized in that** the signal in terms of current is non-torque-generating.

4. The control system as claimed in claim 1 or 2, **characterized in that** it comprises a safety block (BS) designed so as to compare the first speed (W1s) and the second speed (W2s) that are determined for the synchronous electric motor.

5. The control system as claimed in claim 1, **characterized in that** the first speed estimator (E1) is designed in a control law (LC) implemented by the control system.

6. The control system as claimed in one of claims 1 to 4, **characterized in that** the signal-generating module is activated by the second estimator.

7. The control system as claimed in one of claims 1 to 4, **characterized in that** the signal-generating module is activated by an external control.

8. The control system as claimed in one of claims 1 to 4, **characterized in that** the signal-generating module (MS) is permanently active.
